# EUROPEAN PATENT SPECIFICATION

(11) **EP 2 506 457 B1**
(45) Date of publication and mention of the grant of the patent: **30.03.2016**
(21) Application number: 11160587.9
(22) Date of filing: 31.03.2011
(51) Int. Cl.: H04B 10/60, H04B 10/69, H04L 25/03

(54) **Processing of digital detection signals generated by coherent optical detection**
Verarbeitung von digitalen Erkennungssignalen, die von der kohärenten optischen Erkennung erzeugt werden
Traitement de signaux de détection numériques générés par la détection optique cohérente

(43) Date of publication of application: 03.10.2012
(73) Proprietor: ALCATEL LUCENT, 92100 Boulogne-Billancourt (FR)
(72) Inventor: Bertran Pardo, Oriol, 91620 Nozay (FR); Vacondio, Francesco, 91620 Nozay (FR)
(74) Representative: Sciaux, Edmond

(56) References cited:
- EP-A1- 2 146 448
- EP-A2- 1 182 836
- US-A- 5 563 911
- US-A1- 2005 111 539

## Description

### Field of the invention

The invention relates to the technical field of optical communication systems, in particular to coherent optical receivers.

### Background

The power consumption of communication networks increases exponentially together with the demand for capacity. Some predictions foresee a rate of growth of 50% per year. Shoah and Shirani in Proceedings of Canadian Conference on Electrical and Computer Engineering, pp 879 - 882 Vol.2, IEEE 2004 have identified Run-Time Reconfiguration in Finite Impulse Response (FIR) filters as a promising source of power savings in communication systems. In this publication, the decision of when to use a 15-tap filter is made by accumulating the absolute value of the difference between the output of the filter and the desired output during a period of training time and comparing it to a threshold.

EP1182836 relates to an apparatus for compensating transmission characteristics deteriorated by fading of frequency selectivity in high speed mobile digital communications. A number-of-tap variable type adaptive filter adaptively equalizes the received signal. A number-of-tap setting means controls the number of taps of the adaptive filter corresponding to an estimated impulse response of the transmission line. The impulse response estimation relies on a training signal.

EP2146448 discloses an optical PDM-QPSK receiver comprising a polarization splitter in order to isolate two polarization planes or components of the combined signal to be post-processed in the electrical domain. Demodulators, optical detectors and a bank of analog-to-digital converters are followed by a set of finite-impulse response (FIR) filter banks for compensation of chromatic dispersion. A final equalization stage referred to as polarization de-multiplexer comprises four polarization de-multiplexing taps aₓₓ, a_{xy}, a_{yx} and a_{yy}.

### Summary

In an embodiment, the invention provides a method of processing digital detection signals generated by a coherent optical detection device, comprising:
using a plurality of FIR filters to filter a pair of digital detection signals generated by a coherent optical detection device, wherein the pair of digital detection signals corresponds to a pair of polarization components of a detected optical signal,
measuring a physical impairment of the detected optical signal, and
reconfiguring the plurality of FIR filters to operate with a number of taps that derives from the measured physical impairment.

In an embodiment, the invention provides also a digital signal processing device for a coherent optical receiver, comprising:
a plurality of FIR filters for filtering a pair of digital detection signals generated by a coherent optical detection device, wherein the pair of digital detection signals corresponds to a pair of polarization components of a detected optical signal,
a measurement module for measuring a physical impairment of the detected optical signal, and
a filter control module for reconfiguring the plurality of FIR filters to operate with a number of taps that derives from the measured physical impairment.

According to embodiments, such a method or device can comprise one or more of the features below.

In an embodiment, the plurality of FIR filters comprises four adaptive FIR filters in a butterfly structure adapted to achieve a polarization demultiplexing to generate a pair of filtered digital signals that corresponds to a pair of initial polarization components of the detected optical signal.

In an embodiment, the plurality of FIR filters comprises fixed or adaptive FIR filters adapted to achieve chromatic dispersion compensation.

In an embodiment, the method further comprises deriving a tap number requirement of the FIR filters from the physical impairment measurement and a redefined calibration table, wherein the reconfiguring comprises making the number of operating taps of the FIR filters equal to the tap number requirement.

In an embodiment, the digital signal processing device further comprises a tap number determination module for deriving a tap number requirement of the FIR filters from the physical impairment measurement and a predefined calibration table.

In an embodiment, the method further comprises determining a difference between an actual number of operating filter taps and the determined tap number requirement and reconfiguring the FIR filters if the difference exceeds a predefined threshold value.

In an embodiment, the filter control module is adapted to determine a difference between an actual number of operating filter taps and the determined tap number requirement and reconfigure the FIR filters if the difference exceeds a predefined threshold value.

In an embodiment, reconfiguring the plurality of FIR filters comprises switching on or switching off a number of filter taps in each FIR filter.

In embodiments, the physical impairment comprises polarization mode dispersion (PMD) and/or residual chromatic dispersion (CD).

In embodiments, measuring the physical impairment comprises estimating an amount of polarization mode dispersion and/or an amount of residual chromatic dispersion by processing the filtered digital signals and/or FIR filter coefficients.

Aspects of the invention stem from the observation that coherent receivers have emerged as key enablers for responding to the growing demand for capacity and are also much more power-consuming than classical quadratic receivers partly due to a large power consumption of DSP. Aspects of the invention stem from the observation that digital signal post-processing techniques in coherent receivers make it possible to monitor certain physical impairments or degradations suffered by an optical signal along a transmission path. The invention is based on the idea of reducing the power consumption of coherent receivers used in optical communication systems by adapting a number of filter taps as a function of optical channel impairments.

### Brief description of the drawings

These and other aspects of the invention will be apparent from and elucidated with reference to the embodiments described hereinafter, by way of example, with reference to the drawings.
Figure 1 is a functional representation of a digital signal processing chain for a coherent optical receiver in accordance with an embodiment.
Figure 2 is a graph showing PMD measurements that can serve to define a calibration curve or table.

### Detailed description of the embodiments

In the field of optical fiber transmission, the tolerance to fiber linear effects decreases as the symbol-rate increases. For a given modulation format, when moving from one bit rate to a higher one, the sensitivity to optical noise and the maximum tolerable amount of polarization mode dispersion (PMD) decrease by the ratio of the bit-rates and the minimum filter bandwidth increases by the same amount. Moreover, the maximum tolerable amount of chromatic dispersion (CD) decreases by the square of the same ratio. In that respect, coherent receivers have revealed as a key solution because they offer the possibility of adaptively equalizing linear effects through appropriate digital signal processing.

Coherent transponders are conventionally designed for the worst case. For example, a number of filter taps of the adaptive equalizer is fixedly dimensioned according to a maximum amount of PMD that the coherent receiver is intended to mitigate. There will now be described a method and a digital signal processor adapted to optimize the power consumption of the coherent receiver according to the actual impairments of the optical signal that is being received.

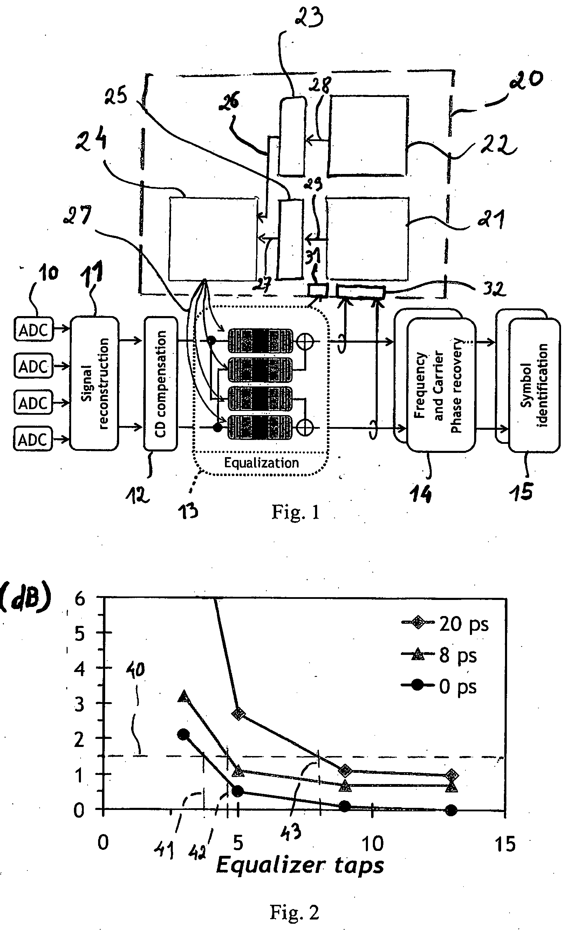

With reference to Figure 1, a digital signal processing chain of a coherent optical receiver is functionally depicted. The processing chain comprises analog-to-digital converters 10, a signal reconstruction module 11, a chromatic dispersion compensation filter module 12, a polarization demultiplexing and equalization filter module 13, a frequency and carrier phase recovery module 14 and a symbol identification module 15. These components and the optical part of the coherent receiver to which they are attached are well-known in the art and are described in further details in EP-A-2273701 on figures 1, 2 and 5.

The polarization demultiplexing and equalization filter module 13 comprises four multi-tap FIR filters in a butterfly structure which are continuously updated using an appropriate adaptation algorithm, e.g. the constant modulus algorithm CMA.

A filter memory control module 20 interacts with the multi-tap FIR filters of module 13 so as to dynamically adapt the length of the FIR filters to certain properties of the optical channel to which the coherent receiver is coupled.

For that purpose, in an embodiment, the filter memory control module 20 operates as follows:
- A residual CD estimation module 21 estimates residual CD that exists at the input of the equalization filter module 13, i.e. chromatic dispersion which has not been compensated neither optically nor digitally by CD compensation filter module 12. The measured value <CD> is passed to a tap number conversion module 25 as shown by arrow 29.
- Tap number conversion module 25 converts the measurement <CD> into a tap number requirement N1. For that purpose, tap number conversion module 25 relies on stored calibration data, e.g. in the form of a look-up table or graph or similar, and stored conversion rules. N1 is the minimal integer number of filter taps that must be used to obtain the desired signal quality at the decoder as a function of the residual CD. This number can be determined in advance by measurements made with controlled levels of chromatic dispersion. Tap number requirement N1 is passed to a filter configuration control module 24 as shown by arrow 27.
- Similarly, a PMD estimation module 22 estimates PMD that exists at the input of the equalization filter module 13. The measured value <PMD> is passed to a tap number conversion module 23 as shown by arrow 28.
- Tap number conversion module 23 converts the measurement <PMD> into a tap number requirement N2. For that purpose, tap number conversion module 23 also relies on stored calibration data, e.g. in the form of a look-up table or graph or similar, and stored conversion rules. N2 is the minimal integer number of filter taps that must be used to obtain the desired signal quality at the decoder as a function of the PMD. This number can be determined in advance by measurements made with controlled levels of PMD. Tap number requirement N2 is also passed to the filter configuration control module 24 as shown by arrow 26.
- Filter configuration control module 24 uses numbers N1 and N2 to reconfigure the FIR filters of module 13 as shown by arrows 27. Namely, filter configuration control module 24 monitors at all times the number of filter taps that are active in the FIR filters, compares that number to the maximum of N1 and N2 and, as the case may be, reconfigures the FIR filters to make the number of active taps equal to the maximum of N1 and N2.

As a result of the above operations, the equalization filter module 13 is regularly reconfigured according to the impairments found in the transmission link to minimize the number of active taps and hence the electric power consumption while preserving a level of quality of the filtered digital signals.

There are a number of ways of measuring physical impairments such as residual CD, PMD or the differential group delay DGD. In a preferred embodiment, the measurements are made within the post-processing chain of the coherent receiver by digital signal processing of the FIR filter coefficients or the FIR filter coefficients in combination with the filtered signals. For that purpose, filter memory control module 20 is provided with input interfaces 31 for acquiring the complex filter coefficients and, optionally, input interfaces 32 for acquiring the filtered signals at the output of equalization filter module 13. Corresponding signal processing adapted to derive the residual CD or DGD from this data is performed by the estimation modules 22 and 21. In principle, the residual CD can be derived from a symmetrical spread of energy in the non-central filter coefficients, whereas DGD can be derived from an amount of off-centering of the highest filter coefficients. Further details of such computations can be found in "Optical Performance Monitoring from FIR Filter Coefficients in Coherent Receivers", F.N. Hauskel et al., paper OThW2, OFC/NFOEC 2008 and in "Optical Performance Monitoring in Digital Coherent Receivers" JOURNAL OF LIGHTWAVE TECHNOLOGY, VOL. 27, No. 16, August 15, pp. 2009 3623.

A method for obtaining a calibration table that can be used in the conversion module 23 will now be described in reference to Figure 2. Fig. 2 shows a penalty of Optical Signal to Noise Ratio (OSNR penalty in dB) as a function of the number of taps used in the equalization filter module 13 for a 100Gbits/s PDM-QPSK modulated optical signal. The ordinate refers to the OSNR penalty caused by PMD alone. The measurements were obtained for different PMD values: 0, 8, and 20 ps. In a given transmission link, the admissible OSNR penalty will be a function of the FEC limit, the system margin and the actual OSNR obtained at the end of the link. In figure 2, line 40 illustrates a case in which the admissible OSNR penalty is 1.5dB. From that value, a calibration curve can be obtained by observing the intersections of line 40 with the PMD measurements, namely points 41, 42 and 43 respectively. The resulting values of N2 that are indicated in table 1. These numbers are purely illustrative and will vary as a function of the implementation.

**Table 1: tap number requirement N2 for an OSNR penalty of 1.5 dB in the system of Figure 2**

| PMD (ps) | N2 |
|---|---|
| 0 | 4 |
| 8 | 5 |
| 20 | 8 |

A similar method can be used to define the calibration data for residual chromatic dispersion.

The above described embodiment treats PMD and residual CD as independent impairments. Therefore, an independent tap number requirement is computed for each type of impairment. However there may be cases where the independence assumption does not hold. In such situation, a single tap number conversion module should be implemented instead of conversion modules 23 and 25, so as to produce a single tap number requirement as a function of both residual CD and PMD.

Operations of the filter configuration control module 24 will now be described. The filter configuration control module 24 is responsible for reconfiguring the FIR filters as a function of the tap number requirements N1 and N2. If the number of active taps is larger than the requirement Max (N1, N2), a number of taps are switched off by setting their respective coefficients to zero and by excluding them from the filter adaptation process. As a result of reducing the number of active taps that have to be updated, the power consumption of the equalization filter is reduced. Symmetrically, if the requirement Max (N1, N2) is larger than the number of active taps, a number of taps are switched on by letting again the filter adaptation process update their coefficients to non-zero values.

Several measures can be taken to stabilize the reconfiguration method that is performed by the filter memory control module 20, e.g. to prevent the tap number from changing or oscillating too often. Such measures involve for example setting a positive threshold that must be exceeded by the absolute value of difference between the actual number of active taps and the requirement Max (N1, N2) to trigger reconfiguration, e.g. 2 or 4. Such measures may also involve low pass filtering the measurements and/or forcing time hysteresis so that no reconfiguration can occur within a defined hysteresis period from the time at which the threshold is exceeded.

Computations have shown that the filter reconfiguration method explained above can save about 15% in terms of power consumption of the equalization filter module 13.

This technique could also be used to adapt the CD compensation filter module 12 to further reduce the overall power consumption of the optical receiver. CD compensation filter module 12 is also a FIR filter.

Elements such as the filter memory control module or its components could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of processing digital detection signals generated by a coherent optical detection device comprising:
using a plurality of FIR filters (12, 13) to filter a pair of digital detection signals generated by a coherent optical detection device, wherein the pair of digital detection signals corresponds to a pair of polarization components of a detected optical signal, wherein the plurality of FIR filters comprises four adaptive FIR filters (13) in a butterfly structure adapted to achieve a polarization demultiplexing to generate a pair of filtered digital signals that corresponds to a pair of initial polarization components of the detected optical signal,
**characterized by**:
measuring a physical impairment of the detected optical signal,
reconfiguring (27) the plurality of FIR filters to operate with a number of taps that derives from the measured physical impairment.

2. A method in accordance with claim 1, wherein the plurality of FIR filters comprises FIR filters (12) adapted to achieve chromatic dispersion compensation.

3. A method in accordance with one of claims 1 to 2, further comprising deriving a tap number requirement (26, 27) of the FIR filters from the physical impairment measurement (28, 29) and a predefined calibration table (41, 42, 43), wherein the reconfiguring comprises making the number of operating taps of the FIR filters equal to the tap number requirement.

4. A method in accordance with claim 3, further comprising determining a difference between an actual number of operating filter taps and the determined tap number requirement and reconfiguring the FIR filters if the difference exceeds a predefined threshold value.

5. A method in accordance with one of claims 1 to 4, wherein reconfiguring the plurality of FIR filters comprises switching on or switching off a number of filter taps in each FIR filter.

6. A method in accordance with claim 5, wherein switching off a filter tap comprises setting a filter tap coefficient to zero and discontinuing an adaptation process of the filter tap coefficient and wherein switching on a filter tap comprises resuming an adaptation process of the filter tap coefficient.

7. A method in accordance with one of claims 1 to 6, wherein the physical impairment comprises polarization mode dispersion.

8. A method in accordance with claim 7, wherein measuring the physical impairment comprises estimating an amount of polarization mode dispersion (28) by processing the FIR filter coefficients.

9. A method in accordance with one of claims 1 to 6, wherein the physical impairment comprises residual chromatic dispersion.

10. A method in accordance with claim 9, wherein measuring the physical impairment comprises estimating an amount of residual chromatic dispersion (29) by processing the FIR filter coefficients.

11. A method in accordance with one of claims 1 to 6, wherein the physical impairment comprises polarization mode dispersion and residual chromatic dispersion and wherein measuring the physical impairment comprises estimating an amount of polarization mode dispersion (28) and an amount of residual chromatic dispersion (29) by processing the FIR filter coefficients and the filtered digital signals.

12. A digital signal processing device (10-15, 20) for a coherent optical receiver comprises:
a plurality of FIR filters (13) for filtering a pair of digital detection signals generated by a coherent optical detection device, wherein the pair of digital detection signals corresponds to a pair of polarization components of a detected optical signal, wherein the plurality of FIR filters comprises four adaptive FIR filters (13) in a butterfly structure adapted to achieve a polarization demultiplexing to generate a pair of filtered digital signals that corresponds to a pair of initial polarization components of the detected optical signal,
**characterized by**:
a measurement module (21, 22) for measuring a physical impairment of the detected optical signal, and
a filter control module (24) for reconfiguring the plurality of FIR filters to operate with a number of taps that derives from the measured physical impairment.

13. A digital signal processing device in accordance with claim 12, further comprising a tap number determination module (23, 25) for deriving a tap number requirement of the FIR filters from the physical impairment measurement and a predefined calibration table (41,42, 43).

14. A digital signal processing device in accordance with claim 13, wherein the filter control module (24) is adapted to determine a difference between an actual number of operating filter taps and the determined tap number requirement and reconfigure the FIR filters if the difference exceeds a predefined threshold value.

## Patentansprüche

1. Verfahren zur Bearbeitung von digitalen Detektionssignalen, die von einer kohärenten optischen Detektionsvorrichtung erzeugt werden, umfassend:
Verwenden einer Vielzahl von FIR-Filtern (12, 13) zum Filtern eines digitalen Detektionssignalpaars, das von einer kohärenten optischen Detektionsvorrichtung erzeugt wird, wobei das digitale Detektionssignalpaar einem Polarisationskomponentenpaar eines detektierten optischen Signals entspricht, wobei die Vielzahl von FIR-Filtern vier adaptive FIR-Filter (13) in einer Schmetterlingsstruktur umfasst, die angepasst sind, um ein Polarisations-Demultiplexen zu erreichen, um ein gefiltertes digitales Signalpaar zu erzeugen, das einem ursprünglichen Polarisationskomponentenpaar des detektierten optischen Signals entspricht,
**gekennzeichnet durch**:
Messen einer physikalischen Beeinträchtigung des detektierten optischen Signals,
Neukonfigurieren (27) der Vielzahl von FIR-Filtern, um mit einer Anzahl von Abgriffen zu wirken, die sich von der gemessenen physikalischen Beeinträchtigung ableitet.

2. Verfahren nach Anspruch 1, wobei die Vielzahl von FIR-Filtern FIR-Filter (12) umfasst, die angepasst sind, um eine Kompensation chromatischer Dispersion zu erreichen.

3. Verfahren nach einem der Ansprüche 1 bis 2, weiterhin umfassend das Ableiten einer Abgriffsanzahlvorgabe (26, 27) der FIR-Filter von der Messung (28, 29) der physikalischen Beeinträchtigung und einer vorausdefinierten Kalibriertabelle (41, 42, 43), wobei das Neukonfigurieren das Gleichsetzen der Anzahl von wirkenden Abgriffen der FIR-Filter mit der Abgriffsanzahlvorgabe umfasst.

4. Verfahren nach Anspruch 3, weiterhin umfassend das Bestimmen einer Differenz zwischen einer tatsächlichen Anzahl von wirkenden Filterabgriffen und der bestimmten Abgriffsanzahlvorgabe und das Neukonfigurieren der FIR-Filter, falls die Differenz einen vorausdefinierten Grenzwert übersteigt.

5. Verfahren nach einem der Ansprüche 1 bis 4, wobei das Neukonfigurieren der Vielzahl von FIR-Filtern das Einschalten oder Ausschalten einer Anzahl von Filterabgriffen in jedem FIR-Filter umfasst.

6. Verfahren nach Anspruch 5, wobei das Ausschalten eines Filterabgriffs das Nullsetzen eines Filterabgriff-Koeffizienten und das Abbrechen eines Anpassungsprozesses des Filterabgriff-Koeffizienten umfasst und wobei das Einschalten eines Filterabgriffs das Wiederaufnehmen eines Anpassungsprozesses des Filterabgriff-Koeffizienten umfasst.

7. Verfahren nach einem der Ansprüche 1 bis 6, wobei die physikalische Beeinträchtigung Polarisationsmodendispersion umfasst.

8. Verfahren nach Anspruch 7, wobei das Messen der physikalischen Beeinträchtigung das Schätzen einer Höhe der Polarisationsmodendispersion (28) durch Verarbeiten der FIR-Filter-Koeffizienten umfasst.

9. Verfahren nach einem der Ansprüche 1 bis 6, wobei die physikalische Beeinträchtigung chromatische Restdispersion umfasst.

10. Verfahren nach Anspruch 9, wobei das Messen der physikalischen Beeinträchtigung das Schätzen einer Höhe der chromatischen Restdispersion (29) durch Verarbeiten der FIR-Filter-Koeffizienten umfasst.

11. Verfahren nach einem der Ansprüche 1 bis 6, wobei die physikalische Beeinträchtigung Polarisationsmodendispersion und chromatische Restdispersion umfasst und wobei das Messen der physikalischen Beeinträchtigung das Schätzen einer Höhe der Polarisationsmodendispersion (28) und einer Höhe der chromatischen Restdispersion (29) durch Verarbeiten der FIR-Filter-Koeffizienten und der gefilterten digitalen Signale umfasst.

12. Digitale Signalverarbeitungsvorrichtung (10-15, 20) für einen kohärenten optischen Empfänger, umfassend:
eine Vielzahl von FIR-Filtern (13) zum Filtern eines digitalen Detektionssignalpaars, das von einer kohärenten optischen Detektionsvorrichtung erzeugt wird, wobei das digitale Detektionssignalpaar einem Polarisationskomponentenpaar eines detektierten optischen Signals entspricht, wobei die Vielzahl von FIR-Filtern vier adaptive FIR-Filter (13) in einer Schmetterlingsstruktur umfasst, die angepasst sind, um ein Polarisations-Demultiplexen zu erreichen, um ein gefiltertes digitales Signalpaar zu erzeugen, das einem ursprüngliche Polarisationskomponentenpaar des detektierten optischen Signals entspricht,
**gekennzeichnet durch**:
ein Messmodul (21, 22) zum Messen einer physikalischen Beeinträchtigung des detektierten optischen Signals, und
ein Filtersteuermodul (24) zum Neukonfigurieren der Vielzahl von FIR-Filtern, um mit einer Anzahl von Abgriffen zu wirken, die sich von der gemessenen physikalischen Beeinträchtigung ableitet.

13. Digitale Signalverarbeitungsvorrichtung nach Anspruch 12, weiterhin umfassend ein Abgriffsanzahl-Bestimmungsmodul (23, 25) zum Ableiten einer Abgriffsanzahlvorgabe der FIR-Filter von der Messung der physikalischen Beeinträchtigung und einer vorausdefinierten Kalibriertabelle (41, 42, 43).

14. Digitale Signalverarbeitungsvorrichtung nach Anspruch 13, wobei das Filtersteuermodul (24) angepasst ist, um eine Differenz zwischen einer tatsächlichen Anzahl von wirkenden Filterabgriffen und der bestimmten Abgriffsanzahlvorgabe zu bestimmen und die FIR-Filter neu zu konfigurieren, falls die Differenz einen vorausdefinierten Grenzwert übersteigt.

## Revendications

1. Procédé de traitement de signaux de détection numériques générés par un dispositif de détection optique cohérent comprenant l'étape suivante :
utiliser une pluralité de filtres FIR (12, 13) pour filtrer une paire de signaux de détection numériques générés par un dispositif de détection optique cohérent, dans lequel la paire de signaux de détection numériques correspond à une paire de composantes de polarisation d'un signal optique détecté, dans lequel la pluralité de filtres FIR comprend quatre filtres FIR adaptatifs (13) dans une structure en papillon adaptés pour effectuer un démultiplexage de polarisation pour générer une paire de signaux numériques filtrés qui correspond à une paire de composantes de polarisation initiales du signal optique détecté,
**caractérisé par** les étapes suivantes :
mesurer une déficience physique du signal optique détecté,
reconfigurer (27) la pluralité de filtres FIR pour fonctionner avec un nombre de dérivations qui est dérivé de la déficience physique mesurée.

2. Procédé selon la revendication 1, dans lequel la pluralité de filtres FIR comprend des filtres FIR (12) adaptés pour effectuer une compensation de dispersion chromatique.

3. Procédé selon l'une des revendications 1 et 2, consistant en outre à dériver un nombre exigé de dérivations (26, 27) des filtres FIR à partir de la mesure de déficience physique (28, 29) et d'une table d'étalonnage prédéfinie (41, 42, 43), dans lequel la reconfiguration consiste à rendre le nombre de dérivations en fonctionnement des filtres FIR égal au nombre exigé de dérivations.

4. Procédé selon la revendication 3, consistant en outre à déterminer une différence entre un nombre réel de dérivations de filtres en fonctionnement et le nombre exigé de dérivations déterminé et à reconfigurer les filtres FIR si la différence dépasse une valeur de seuil prédéfinie.

5. Procédé selon l'une des revendications 1 à 4, dans lequel la reconfiguration de la pluralité de filtres FIR comprend l'activation ou la désactivation d'un nombre de dérivations de filtres dans chaque filtre FIR.

6. Procédé selon la revendication 5, dans lequel la désactivation d'une dérivation de filtre comprend le réglage d'un coefficient de dérivation de filtre sur zéro et l'interruption d'un processus d'adaptation du coefficient de dérivation de filtre et dans lequel l'activation d'une dérivation de filtre comprend la reprise d'un processus d'adaptation du coefficient de dérivation de filtre.

7. Procédé selon l'une des revendications 1 à 6, dans lequel la déficience physique comprend la dispersion de mode de polarisation.

8. Procédé selon la revendication 7, dans lequel la mesure de la déficience physique comprend l'estimation d'une quantité de dispersion de mode de polarisation (28) en traitant les coefficients de filtre FIR.

9. Procédé selon l'une des revendications 1 à 6, dans lequel la déficience physique comprend la dispersion chromatique résiduelle.

10. Procédé selon la revendication 9, dans lequel la mesure de la déficience physique comprend l'estimation d'une quantité de dispersion chromatique résiduelle (29) en traitant les coefficients de filtre FIR.

11. Procédé selon l'une des revendications 1 à 6, dans lequel la déficience physique comprend la dispersion de mode de polarisation et la dispersion chromatique résiduelle et dans lequel la mesure de la déficience physique comprend l'estimation d'une quantité de dispersion de mode de polarisation (28) et d'une quantité de dispersion chromatique résiduelle (29) en traitant les coefficients de filtre FIR et les signaux numériques filtrés.

12. Dispositif de traitement de signaux numériques (10 à 15, 20) pour un récepteur optique cohérent comprenant :
une pluralité de filtres FIR (13) pour filtrer une paire de signaux de détection numériques générés par un dispositif de détection optique cohérent, dans lequel la paire de signaux de détection numériques correspond à une paire de composantes de polarisation d'un signal optique détecté, dans lequel la pluralité de filtres FIR comprend quatre filtres FIR adaptatifs (13) dans une structure en papillon adaptés pour effectuer un démultiplexage de polarisation pour générer une paire de signaux numériques filtrés qui correspond à une paire de composantes de polarisation initiales du signal optique détecté, **caractérisé par** :
un module de mesure (21, 22) pour mesurer une déficience physique du signal optique détecté, et
un module de commande de filtre (24) pour reconfigurer la pluralité de filtres FIR pour fonctionner avec un nombre de dérivations qui est dérivé de la déficience physique mesurée.

13. Dispositif de traitement de signaux numériques selon la revendication 12, comprenant en outre un module de détermination du nombre de dérivations (23, 25) pour dériver un nombre exigé de dérivations des filtres FIR à partir de la mesure de déficience physique et d'une table d'étalonnage prédéfinie (41, 42, 43).

14. Dispositif de traitement de signaux numériques selon la revendication 13, dans lequel le module de commande de filtre (24) est adapté pour déterminer une différence entre un nombre réel de dérivations de filtres en fonctionnement et le nombre exigé de dérivations déterminé et pour reconfigurer les filtres FIR si la différence dépasse une valeur de seuil prédéfinie.
